# FASCICULE DE BREVET EUROPEEN

(11) **EP 3 084 569 B1**
(45) Date de publication et mention de la délivrance du brevet: **11.04.2018**
(21) Numéro de dépôt: 14827462.4
(22) Date de dépôt: 18.12.2014
(51) Int. Cl.: G06F 3/041

(54) **DISPOSITIF DE CONTROLE POUR VEHICULE AUTOMOBILE ET PROCEDE DE COMMANDE**
STEUERUNGSVORRICHTUNG FÜR EIN KRAFTFAHRZEUG UND STEUERUNGSVERFAHREN
CONTROL DEVICE FOR A MOTOR VEHICLE AND CONTROL METHOD

(30) Priorité: 19.12.2013 FR 1303009
(43) Date de publication de la demande: 26.10.2016
(73) Titulaire: DAV, 94046 Créteil Cedex (FR)
(72) Inventeur: DABIC, Stéphanie, F-94046 Creteil Cedex (FR); VANHELLE, Stéphane, F-94046 Creteil Cedex (FR)
(74) Mandataire: Delplanque, Arnaud
(86) Numéro de dépôt international: PCT/FR2014/000292
(87) Numéro de publication internationale: WO 2015/092168

(56) Documents cités:
- JP-A- 2007 042 004
- US-A1- 2013 063 389

## Description

La présente invention concerne un dispositif de contrôle pour véhicule automobile et un procédé de commande dudit dispositif de contrôle.

Depuis ces dernières années, les voitures sont devenues plus faciles à manipuler avec l'apparition de nouvelles technologies émergentes (par exemple direction assistée, ABS, régulateur de vitesse, radar de recul etc...). Paradoxalement toutefois, le nombre de fonctions à contrôler pendant la conduite a lui aussi beaucoup augmenté. Ceci peut induire une certaine complexité liée à la mauvaise connaissance de l'utilisation de ces fonctionnalités et à leur diversité. La voiture est devenue un véritable espace de vie, perçue comme un centre de communication personnel et interconnecté : avec par exemple le lecteur MP3, le GPS, la connexion avec les téléphones portables.

L'introduction de ces nouvelles fonctions se traduit par une augmentation du nombre de boutons sur le tableau de bord d'un cockpit de voiture. Cependant, le nombre de boutons ne peut pas être augmenté à l'infini, du fait notamment de la complexité engendrée, de l'espace limité, de l'accessibilité ou de la charge cognitive. De plus, l'interaction du conducteur avec les systèmes embarqués dans la voiture peut reproduire une situation de surcharge attentionnelle dans laquelle le conducteur peut ne pas traiter au mieux toutes les informations de la tâche de conduite, se traduisant par des erreurs et un temps de détection plus long.

Une possibilité est de centraliser les boutons en les remplaçant par un écran tactile. Ceci permet de continuer à augmenter le nombre des fonctions, celles-ci devenant programmables et reconfigurables et exposées de façon temporaire ou permanente selon le contexte ou la fonction activée. L'écran inclut ainsi une possibilité de multifonctionnalité, tout en dématérialisant les boutons et en étant personnalisable. De plus, les écrans présentent trois autres avantages majeurs : ils permettent d'une part une interaction directe (la co-implantation de l'affichage et de saisie), d'autre part ils sont souples (l'affichage peut être facilement configuré pour un certain nombre de fonctions), et enfin ils sont intuitifs (méthode d'interaction familière comme par exemple « pointer »).

Cependant, contrairement au cas d'un bouton-poussoir, lorsque le conducteur interagit avec un écran tactile, il ne reçoit aucune rétroaction liée directement à son action sur l'interface, autre que le simple contact de son doigt s'écrasant sur l'écran.

Afin de compenser la perte d'informations causée par la substitution d'interfaces mécaniques classiques par des écrans tactiles, il est prévu l'ajout d'un retour, tel que haptique, pour fournir une rétroaction du système à l'utilisateur. Ce retour permet d'éviter l'ambiguïté possible de la prise en compte de l'action de l'utilisateur par le système, susceptible de favoriser l'apparition de situations dangereuses. Il doit cependant en outre éviter de surcharger les voies visuelles et auditives déjà très sollicitées par la tâche de conduite. En effet, l'utilisation d'écrans tactiles dans un véhicule automobile ne doit pas gêner l'attention du conducteur. A titre d'exemple, le document JP2007042004 est conforme au préambule des revendications 1 et 8 à 11. Un but de la présente invention est de fournir un dispositif de contrôle et un procédé de commande dudit dispositif de contrôle, qui améliore le ressenti de l'utilisateur, sans gêner la conduite, qui soit bien perçu et apprécié par les utilisateurs, et qui puisse être discriminable des autres signaux pour une application d'écrans tactiles respectant les contraintes automobiles.

A cet effet, la présente invention a pour objet un procédé de commande d'un dispositif de contrôle pour véhicule automobile dans lequel on mesure la variation de pression d'un appui d'un utilisateur sur une surface tactile et on génère un retour sensitif, caractérisé en ce que le retour sensitif comporte au moins un retour vibratoire lorsque la variation de la pression d'appui sur une durée prédéterminée est comprise dans une plage prédéfinie et en ce qu'on substitue le retour sensitif par un retour sonore de substitution lorsque la variation de la pression d'appui sur la durée prédéterminée sort de la plage prédéfinie.

On constate en effet que lorsque l'utilisateur appuie et/ou relâche très rapidement la surface tactile, tel qu'en laissant le doigt appuyé sur la surface tactile moins de 80 ms, la perception du retour vibratoire peut être gênée du fait d'une perte de contact entre la peau et la surface tactile en vibration. Ainsi, l'utilisateur peut ne pas percevoir le signal haptique délivré puisque le doigt perd le contact au moment de la génération de la vibration. Dans ces situations pour lesquelles l'appui ou le relâché est très court, le retour sonore de substitution permet de simuler la perception par contact de la vibration de la surface tactile. Le retour sonore de substitution donne ainsi l'impression à l'utilisateur d'avoir ressenti un retour haptique.

Selon un exemple de réalisation, le retour sensitif comporte un retour vibratoire et un retour sonore associé lorsque la variation de la pression d'appui sur une durée prédéterminée est comprise dans une plage prédéfinie, c'est-à-dire pour un appui suffisamment long. On substitue alors le retour sensitif audio-haptique par un retour sonore de substitution lorsque la variation de la pression d'appui sur la durée prédéterminée sort de la plage prédéfinie.

On prévoit que la plage de fréquence du retour sonore de substitution soit distincte de la plage de fréquence du retour sonore associé au retour vibratoire, ce qui permet de distinguer le retour sonore d'un appui en conditions standards, c'est-à-dire suffisamment long, du retour sonore de substitution simulant un retour haptique.

Selon un exemple de réalisation, la plage de fréquence du retour sonore de substitution est sensiblement la même que la plage de fréquence du retour vibratoire. En conservant la fréquence du retour vibratoire pour la génération du retour sonore de substitution, on améliore la ressemblance avec un retour haptique en faisant appel au son mémorisé par l'utilisateur pour un retour vibratoire. Le retour sonore de substitution permet ainsi de simuler via le canal auditif la sensation audio-haptique équivalente au retour sensitif audio-haptique pour un appui en conditions standards.

Selon un exemple de réalisation, la durée du retour sonore de substitution est sensiblement égale à la durée du retour vibratoire. En conservant la durée du retour vibratoire pour la génération du retour sonore de substitution, on améliore la simulation d'un retour haptique en faisant appel au ressenti mémorisé par l'utilisateur pour un retour vibratoire.

Selon un exemple de réalisation, le retour sensitif comporte au moins un retour vibratoire lorsque la valeur de la variation de la pression d'appui sur une durée prédéterminée est supérieure ou égale à un seuil prédéfini et on substitue le retour sensitif par un retour sonore de substitution lorsque la valeur de la variation de la pression d'appui sur la durée prédéterminée est inférieure au seuil prédéfini.

Par exemple, on substitue le retour sensitif par un retour sonore de substitution lorsque la pression d'appui s'annule en moins de 80ms. En effet, en dessous de 80ms, il devient difficile au dispositif de contrôle de traiter l'information et de générer en réponse un retour haptique à l'utilisateur sur une durée restante permettant de bonnes conditions de perception par contact par l'utilisateur.

L'invention a aussi pour objet un procédé de commande d'un dispositif de contrôle pour véhicule automobile selon les revendications 8-10. Le premier et le deuxième retour sensitif permettent ainsi de simuler l'appui-relâché d'un bouton-poussoir. La génération du retour sonore de substitution en remplacement du premier et/ou du deuxième retour sensitif, vibratoire ou audio-haptique, dans le cas où la variation de pression mesurée décroîtrait trop vite, indiquant un appui ou un relâché très rapide, permet de s'assurer que l'utilisateur ait quand même l'impression d'avoir ressenti un retour haptique. L'invention a aussi pour objet un dispositif de contrôle pour véhicule automobile selon la revendication indépendante 11.

### DESCRIPTION SOMMAIRE DES DESSINS

D'autres avantages et caractéristiques apparaîtront à la lecture de la description de l'invention, ainsi que sur les figures annexées qui représentent un exemple de réalisation non limitatif de l'invention et sur lesquelles :
- La figure 1 représente un exemple de dispositif de contrôle pour véhicule automobile,
- la figure 2 représente un graphique de la pression d'appui d'un utilisateur sur la surface tactile en fonction du temps pour un appui en conditions standards (courbe 1) et ayant un relâché très rapide (courbe 2), et
- la figure 3 illustre un exemple de procédé de commande d'un dispositif de contrôle.

Sur ces figures, les éléments identiques portent les mêmes numéros de référence.

### DESCRIPTION DÉTAILLÉE

On désigne par « haptique », un retour par le toucher. Ainsi, le retour haptique est par exemple une vibration de la surface tactile ressentie par le contact avec la surface tactile. On désigne par « retour vibratoire » ou « vibration », la vibration de la surface tactile permettant la génération d'un retour haptique à l'utilisateur qui manipule la surface tactile, c'est-à-dire par le toucher.

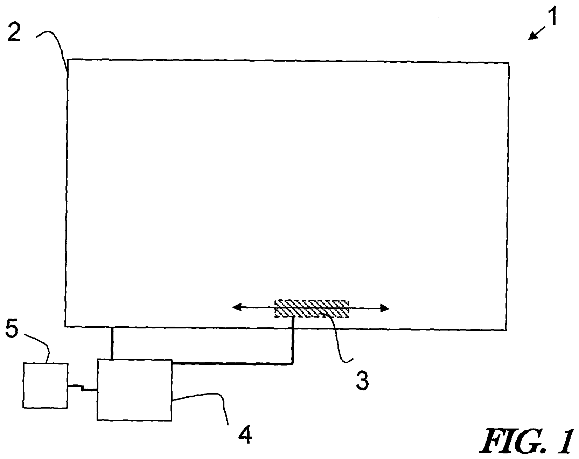

La figure 1 représente un dispositif de contrôle pour véhicule automobile 1, par exemple agencé dans un tableau de commande du véhicule.

Le dispositif de contrôle 1 comporte une surface tactile 2 et un module de retour sensitif 4 configuré pour générer un retour sensitif en réponse à un contact de la surface tactile 2 par un doigt ou tout autre moyen d'activation (par exemple un stylet) d'un utilisateur ayant par exemple modifié ou sélectionné une commande.

La surface tactile 2 est par exemple celle d'un écran tactile. Un écran tactile est un périphérique d'entrée permettant aux utilisateurs d'un système d'interagir avec celui-ci grâce au toucher. Il permet l'interaction directe de l'utilisateur sur la zone qu'il veut sélectionner pour des utilisations diverses comme par exemple, la sélection d'une adresse de destination ou d'un nom dans un répertoire, les réglages du système de climatisation, l'activation d'une fonction dédiée, la sélection d'une piste parmi une liste, ou d'une manière générale le défilement parmi une liste de choix, la sélection, la validation, et l'erreur.

La surface tactile 2 comporte une plaque portant un capteur de contact apte à mesurer une pression d'appui sur la surface tactile pendant une durée prédéterminée.

Le capteur de contact est par exemple un capteur de pression, tel qu'utilisant la technologie FSR pour « Force Sensing Resistor » en anglais, c'est-à-dire utilisant des résistances sensibles à la pression. La technologie SFR présente une très bonne résistance et robustesse, tout en ayant une résolution élevée. De plus, elle est très réactive et précise, tout en étant relativement stable dans le temps. Elle peut avoir une durée de vie assez longue, et est utilisable avec tout type de moyen d'activation, à un coût relativement faible.

Selon une conception de la technologie FSR, le capteur fonctionne en mettant en contact deux couches conductrices par exemple par l'action du doigt. Une des réalisations consiste à recouvrir une dalle de verre d'une couche d'encre conductrice, sur laquelle est superposée une feuille de polyester souple, elle-même recouverte sur sa face interne d'une couche d'encre conductrice. Des plots isolants et transparents isolent la dalle de la feuille polyester. L'activation sur la surface tactile produit un léger enfoncement de la couche polyester, qui vient en contact avec la couche conductrice de la dalle de verre. Le contact local des deux couches conductrices entraîne une modification du courant électrique appliqué sur la dalle, correspondant à un gradient de tension.

Selon un autre exemple, le capteur de contact comprend des couches semi-conductrices souples prises en sandwich entre par exemple une couche conductrice et une couche résistive. En exerçant une pression ou un glissé sur la couche FSR, sa résistance ohmique diminue permettant ainsi, par application d'une tension électrique adaptée, de mesurer la pression appliquée et / ou la localisation de l'endroit où la pression est exercée.

Selon un autre exemple, le capteur de contact est basé sur une technologie capacitive.

Le module de retour sensitif 4 est configuré pour générer un retour sensitif comportant au moins un retour vibratoire lorsque la variation de la pression d'appui sur une durée prédéterminée est comprise dans une plage prédéfinie et pour substituer le retour sensitif par un retour sonore de substitution lorsque la variation de la pression d'appui sur la durée prédéterminée sort de la plage prédéfinie.

La durée prédéterminée est par exemple inférieure à 80ms, telle que de l'ordre de 50ms.

On constate en effet que lorsque l'utilisateur appuie et/ou relâche très rapidement la surface tactile 2, tel qu'en laissant le doigt appuyé sur la surface tactile moins de 80 ms, la perception du retour vibratoire peut être gênée du fait d'une perte de contact entre la peau et la surface tactile 2 en vibration. Ainsi, l'utilisateur peut ne pas percevoir le signal haptique délivré puisque le doigt perd le contact au moment de la génération de la vibration. Dans ces situations pour lesquelles l'appui et/ou le relâché est très court, le retour sonore de substitution permet de simuler la perception par contact de la vibration de la surface tactile 2. Le retour sonore de substitution donne ainsi l'impression à l'utilisateur d'avoir ressenti un retour haptique.

Le procédé de commande et le dispositif de contrôle 1 peuvent ainsi être utilisés pour simuler un appui simple très court ou l'appui-relâché d'un bouton-poussoir ou la manipulation d'un bouton de commande rotatif ou d'une barre de défilement (ou « slider » en anglais) pour lesquels l'appui et/ou le relâché serait trop rapide pour permettre de générer un retour haptique dans de bonnes conditions de perception.

Ainsi, le module de retour sensitif 4 comporte un organe d'émission sonore 5 et au moins un actionneur 3 relié à la plaque de la surface tactile 2, pour générer une vibration en fonction d'un signal issu du capteur de contact. La vibration est par exemple dirigée dans le plan de la surface tactile 2 ou orthogonalement au plan de la surface tactile 2 ou encore dirigée selon une combinaison de ces deux directions.

La vibration est produite par un signal de commande sinusoïdal ou par un signal de commande comportant un ou une succession de pulses, envoyé à l'actionneur 3. Dans le cas de plusieurs actionneurs, ces derniers sont agencés sous la surface tactile 2, dans différentes positions (au centre ou sur un côté) ou dans différentes orientations (dans la direction de l'appui sur la surface ou dans un autre axe).

Selon un exemple de réalisation, l'actionneur 3 repose sur une technologie similaire à celle du Haut-Parleur (en anglais : « Voice Coil »). Il comporte une partie fixe et une partie mobile en translation dans un entrefer de la partie fixe par exemple de l'ordre de 200µm, entre une première et une deuxième position, parallèlement à un axe longitudinal de la partie mobile. La partie mobile est par exemple formée par un aimant mobile coulissant à l'intérieur d'une bobine fixe ou par une bobine mobile coulissant autour d'un aimant fixe, la partie mobile et la partie fixe coopérant par effet électromagnétique. Les parties mobiles sont reliées à la plaque de manière que le mouvement des parties mobiles engendre le mouvement en translation de la plaque pour générer le retour haptique au doigt de l'utilisateur. Cette technologie est facilement contrôlable et permet de déplacer de fortes masses, comme celle d'un écran, à diverses fréquences et respecte les contraintes automobiles très strictes que sont un faible coût, une bonne résistance aux variations de températures importantes, et une facilité de mise en place.

Selon un exemple de réalisation, le retour sensitif comporte uniquement un retour vibratoire lorsque la variation de la pression d'appui sur une durée prédéterminée est comprise dans une plage prédéfinie, c'est-à-dire pour un appui suffisamment long. On substitue le retour vibratoire par un retour sonore de substitution lorsque la variation de la pression d'appui sur la durée prédéterminée sort de la plage prédéfinie.

Selon autre un exemple de réalisation, le retour sensitif comporte un retour vibratoire et un retour sonore associé lorsque la variation de la pression d'appui sur une durée prédéterminée est comprise dans une plage prédéfinie. On substitue alors le retour sensitif audio-haptique par un retour sonore de substitution lorsque la variation de la pression d'appui sur la durée prédéterminée sort de la plage prédéfinie.

On prévoit par exemple que la plage de fréquence du retour sonore de substitution soit distincte de la plage de fréquence du retour sonore associé au retour vibratoire, ce qui permet de distinguer le retour sonore d'un appui en conditions standards, c'est-à-dire suffisamment long, du retour sonore de substitution simulant un retour haptique.

Selon un exemple de réalisation, la plage de fréquence du retour sonore de substitution est sensiblement la même que la plage de fréquence du retour vibratoire, elle est par exemple comprise entre 60 et 200Hz. En conservant la fréquence du retour vibratoire pour la génération du retour sonore de substitution, on améliore la ressemblance avec un retour haptique en faisant appel au son mémorisé par l'utilisateur pour le retour vibratoire. Le retour sonore de substitution permet ainsi de simuler via le canal auditif la sensation audio-haptique équivalente au retour sensitif audio-haptique d'un appui en conditions standards.

Selon un exemple de réalisation, la durée du retour sonore de substitution est sensiblement égale à la durée du retour vibratoire. En conservant la durée du retour vibratoire pour la génération du retour sonore de substitution, on améliore la simulation d'un retour haptique en faisant appel au ressenti mémorisé par l'utilisateur pour un retour vibratoire.

Selon un exemple de réalisation, la substitution du retour sensitif par un retour sonore de substitution est mise en oeuvre en fonction d'un seuil de variation de la pression d'appui sur la durée prédéterminée. Par exemple, on substitue le retour sensitif par un retour sonore de substitution lorsque la pression d'appui s'annule en moins de 80ms. En effet, en dessous de 80ms, il devient difficile au dispositif de contrôle de traiter l'information et de générer en réponse un retour haptique à l'utilisateur sur une durée restante permettant de bonnes conditions de perception par contact de l'utilisateur.

Il est aussi possible de prévoir que le module de retour sensitif 4 soit configuré pour évaluer la vitesse de variation de pression d'appui et pour substituer le retour sensitif par un retour sonore de substitution en fonction du profil de vitesse de variation de pression d'appui, en alternative ou en complément de la comparaison à un seuil de variation de pression d'appui.

Egalement, il est possible de prévoir que le module de retour sensitif 4 soit configuré pour évaluer l'accélération de variation de pression d'appui et pour substituer le retour sensitif par un retour sonore de substitution en fonction du profil d'accélération de variation de pression d'appui, en alternative ou en complément de la comparaison à un seuil de variation de pression d'appui et/ou de la variation de vitesse de pression d'appui.

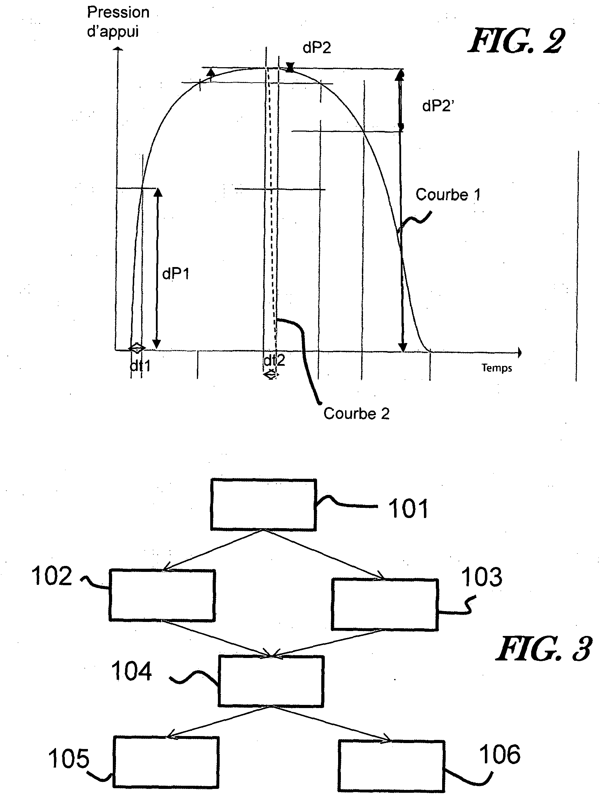

Les figures 2 et 3 illustrent un exemple de réalisation du procédé de commande du dispositif de contrôle simulant le « poussé-relâché » d'un bouton de type touche.

En fonctionnement, la pression d'appui sur la surface tactile 2 est mesurée. Lorsqu'une variation de pression d'appui devient détectable, on mesure la pression d'appui sur une première durée prédéterminée dt1 (étape 104), par exemple en faisant la moyenne de la pression d'appui sur la première durée prédéterminée dt1.

La première durée prédéterminée dt1 est par exemple de l'ordre de 80 millisecondes.

Si la première variation de pression d'appui dp1 sur la première durée prédéterminée dt1 est comprise dans une première plage prédéfinie, alors on génère un premier retour sensitif comportant au moins un retour vibratoire (étape 105).

En revanche, si la première variation de pression d'appui dp1 sur la première durée prédéterminée dt1 sort de la première plage prédéfinie alors le premier retour sensitif est substitué par un premier retour sonore de substitution (étape 106).

Par exemple, on substitue le retour sensitif comportant une vibration par un retour sonore de substitution lorsque la pression d'appui s'annule en moins de 80ms.

Puis, lorsque la pression d'appui mesurée cesse d'augmenter et décroît, on mesure la pression d'appui sur une deuxième durée prédéterminée dt2 (étape 101), par exemple de même durée que le première durée prédéterminée dt1.

Si la deuxième variation de pression d'appui dp2 sur la deuxième durée prédéterminée dt2 est comprise dans une deuxième plage prédéfinie, alors on génère un deuxième retour sensitif comportant au moins un retour vibratoire (étape 102).

En revanche, si la deuxième variation de pression d'appui dp2' sur la deuxième durée prédéterminée dt2 sort de la deuxième plage prédéfinie alors le deuxième retour sensitif est substitué par un deuxième retour sonore de substitution (étape 103).

On a ainsi illustré sur la figure 2, un exemple pour lequel la variation de pression d'appui dp2 est petite pendant la deuxième durée prédéterminée, signifiant que le relâché est réalisé lentement, permettant de générer un retour haptique qui sera ressenti par le doigt de l'utilisateur (courbe 1). On a aussi illustré le cas pour lequel la variation de pression d'appui dp2' est très grande, s'annulant même à la fin de la deuxième durée prédéterminée dt2, signifiant que le relâché est réalisé trop rapidement pour permettre au module de retour sensitif 4 de générer un retour vibratoire qui soit perçu dans de bonnes conditions de perception par contact par l'utilisateur (courbe 2).

Le premier et le deuxième retour sensitif permettent ainsi de simuler l'appui-relâché d'un bouton-poussoir. La génération du retour sonore de substitution en remplacement du premier et/ou du deuxième retour sensitif, vibratoire ou audio-haptique, dans le cas où la variation de pression mesurée décroîtrait trop vite, indiquant un appui ou un relâché très rapide, permet de s'assurer que l'utilisateur ait quand même l'impression d'avoir ressenti un retour haptique.

## Revendications

1. Procédé de commande d'un dispositif de contrôle pour véhicule automobile dans lequel on mesure la variation de pression d'un appui d'un utilisateur sur une surface tactile (2) et on génère un retour sensitif, **caractérisé en ce que** le retour sensitif comporte au moins un retour vibratoire lorsque la variation de la pression d'appui (dp1, dp2, dp2') sur une durée prédéterminée (dt1, dt2) est comprise dans une plage prédéfinie et **en ce qu'**on substitue le retour sensitif par un retour sonore de substitution lorsque la variation de la pression d'appui (dp1, dp2, dp2') sur la durée prédéterminée (dt1, dt2) sort de la plage prédéfinie.

2. Procédé de commande selon la revendication précédente, **caractérisé en ce que** le retour sensitif comporte un retour vibratoire et un retour sonore associé lorsque la variation de la pression d'appui (dp1, dp2, dp2') sur une durée prédéterminée (dt1, dt2) est comprise dans une plage prédéfinie et on substitue le retour sensitif comportant un retour vibratoire et un retour sonore associé par un retour sonore de substitution lorsque la variation de la pression d'appui (dp1, dp2, dp2') sur la durée prédéterminée (dt1, dt2) sort de la plage prédéfinie.

3. Procédé de commande selon la revendication précédente, **caractérisé en ce que** la plage de fréquence du retour sonore de substitution est distincte de la plage de fréquence du retour sonore associé au retour vibratoire.

4. Procédé de commande selon l'une des revendications 2 ou 3, **caractérisé en ce que** la plage de fréquence du retour sonore de substitution est sensiblement la même que la plage de fréquence du retour vibratoire.

5. Procédé de commande selon l'une des revendications précédentes, **caractérisé en ce que** la durée du retour sonore de substitution est sensiblement égale à la durée du retour vibratoire.

6. Procédé de commande selon l'une des revendications précédentes, **caractérisé en ce que** le retour sensitif comporte au moins un retour vibratoire lorsque la valeur de la variation de la pression d'appui (dp1, dp2, dp2') sur une durée prédéterminée (dt1, dt2) est supérieure ou égale à un seuil prédéfini et **en ce qu'**on substitue le retour sensitif par un retour sonore de substitution lorsque la valeur de la variation de la pression d'appui (dp1, dp2, dp2') sur la durée prédéterminée (dt1, dt2) est inférieure au seuil prédéfini.

7. Procédé de commande selon la revendication précédente, **caractérisé en ce qu'**on substitue le retour sensitif par un retour sonore de substitution lorsque la pression d'appui s'annule en moins de 80ms.

8. Procédé de commande d'un dispositif de contrôle pour véhicule automobile dans lequel
- on mesure une première variation de pression d'un appui (dp1) d'un utilisateur sur une surface tactile (2) et on génère un premier retour sensitif, **caractérisé en ce que**
- -lorsque la pression d'appui mesurée cesse d'augmenter et décroît, on génère un deuxième retour sensitif comportant au moins un retour vibratoire lorsque la deuxième variation de pression d'appui (dp2) sur une deuxième durée prédéterminée (dt2) est comprise dans une deuxième plage prédéfinie, le deuxième retour sensitif est substitué par un deuxième retour sonore de substitution lorsque la deuxième variation de pression d'appui (dp2') sur la deuxième durée prédéterminée (dt2) sort de la deuxième plage prédéfinie.

9. Procédé de commande d'un dispositif de contrôle pour véhicule automobile dans lequel
- on mesure une première variation de pression d'un appui d'un utilisateur sur une surface tactile (2) et on génère un premier retour sensitif **caractérisé en ce que**
- le premier retour sensitif comporte au moins un retour vibratoire lorsque la première variation de pression d'appui (dp1) sur une première durée prédéterminée (dt1) est comprise dans une première plage prédéfinie, le premier retour sensitif est substitué par un premier retour sonore de substitution lorsque la première variation de pression d'appui sur la première durée prédéterminée sort de la première plage prédéfinie,
- puis, lorsque la pression d'appui mesurée cesse d'augmenter et décroît, on génère un deuxième retour sensitif.

10. Procédé de commande d'un dispositif de contrôle pour véhicule automobile dans lequel
- on mesure une première variation de pression d'un appui (dp1) d'un utilisateur sur une surface tactile (2) et on génère un premier retour sensitif, **caractérisé en ce que**
- le premier retour sensitif comporte au moins un retour vibratoire lorsque la première variation de pression d'appui (dp1) sur une première durée prédéterminée (dt1) est comprise dans une première plage prédéfinie, le premier retour sensitif est substitué par un premier retour sonore de substitution lorsque la première variation de pression d'appui sur la première durée prédéterminée sort de la première plage prédéfinie,
- puis, lorsque la pression d'appui mesurée cesse d'augmenter et décroît, on génère un deuxième retour sensitif comportant au moins un retour vibratoire lorsque la deuxième variation de pression d'appui (dp2) sur une deuxième durée prédéterminée (dt2) est comprise dans une deuxième plage prédéfinie, le deuxième retour sensitif est substitué par un deuxième retour sonore de substitution lorsque la deuxième variation de pression d'appui (dp2') sur la deuxième durée prédéterminée (dt2) sort de la deuxième plage prédéfinie.

11. Dispositif de contrôle pour véhicule automobile comportant :
- une surface tactile (2) comportant un capteur de contact apte à mesurer une pression d'appui sur la surface tactile, et
- un module de retour sensitif (4) configuré pour générer un retour sensitif en réponse à un contact de la surface tactile,
**caractérisé en ce que** le module de retour sensitif (4) est configuré pour générer un retour sensitif comportant au moins un retour vibratoire lorsque la variation de la pression d'appui sur une durée prédéterminée est comprise dans une plage prédéfinie et pour substituer le retour sensitif par un retour sonore de substitution lorsque la variation de la pression d'appui sur la durée prédéterminée sort de la plage prédéfinie.

## Patentansprüche

1. Verfahren zur Steuerung einer Kontrollvorrichtung für ein Kraftfahrzeug, bei dem die Druckvariation eines Auflagedrucks eines Benutzers auf eine Touch-Oberfläche (2) gemessen und ein sensitives Signal erzeugt wird, **dadurch gekennzeichnet, dass** das sensitive Signal mindestens ein Vibrationssignal umfasst, wenn die Variation des Auflagedrucks (dp1, dp2, dp2') über eine vorbestimmte Dauer (dt1, dt2) in einem vordefinierten Bereich liegt, und dass das sensitive Signal durch ein akustisches Substitutionssignal substituiert wird, wenn die Variation des Auflagedrucks (dp1, dp2, dp2') über die vorbestimmte Dauer (dt1, dt2) aus dem vordefinierten Bereich austritt.

2. Steuerungsverfahren nach dem vorhergehenden Anspruch, **dadurch gekennzeichnet, dass** das sensitive Signal ein Vibrationssignal und ein zugehöriges akustisches Signal umfasst, wenn die Variation des Auflagedrucks (dp1, dp2, dp2') über eine vorbestimmte Dauer (dt1, dt2) in einem vordefinierten Bereich enthalten ist, und das sensitive Signal, das ein Vibrationssignal und ein zugehöriges akustisches Signal umfasst, durch ein akustisches Substitutionssignal substituiert wird, wenn die Variation des Auflagedrucks (dp1, dp2, dp2') über die vorbestimmte Dauer (dt1, dt2) aus dem vordefinierten Bereich austritt.

3. Steuerungsverfahren nach dem vorhergehenden Anspruch, **dadurch gekennzeichnet, dass** der Frequenzbereich des akustischen Substitutionssignals zu dem Frequenzbereich des dem Vibrationssignal zugeordneten akustischen Signals unterschiedlich ist.

4. Steuerungsverfahren nach einem der Ansprüche 2 oder 3, **dadurch gekennzeichnet, dass** der Frequenzbereich des akustischen Substitutionssignals im Wesentlichen derselbe wie der Frequenzbereich des Vibrationssignals ist.

5. Steuerungsverfahren nach einem der vorhergehenden Ansprüche, **dadurch gekennzeichnet, dass** die Dauer des akustischen Substitutionssignals im Wesentlichen gleich der Dauer des Vibrationssignals ist.

6. Steuerungsverfahren nach einem der vorhergehenden Ansprüche, **dadurch gekennzeichnet, dass** das sensitive Signal mindestens ein Vibrationssignal umfasst, wenn der Wert der Variation des Auflagedrucks (dp1, dp2, dp2') über eine vorbestimmte Dauer (dt1, dt2) größer oder gleich einer vordefinierten Schwelle ist, und dass das sensitive Signal durch ein akustisches Substitutionssignal substituiert wird, wenn der Wert der Variation des Auflagedrucks (dp1, dp2, dp2')über die vorbestimmte Dauer (dt1, dt2) niedriger als die vordefinierte Schwelle ist.

7. Steuerungsverfahren nach dem vorhergehenden Anspruch, **dadurch gekennzeichnet, dass** das sensitive Signal durch ein akustisches Substitutionssignal substituiert wird, wenn sich der Auflagedruck innerhalb von weniger als 80 ms aufhebt.

8. Verfahren zur Steuerung einer Kontrollvorrichtung für ein Kraftfahrzeug, bei dem
- eine erste Druckvariation eines Auflagedrucks (dp1) eines Benutzers auf eine Touch-Oberfläche (2) gemessen und ein sensitives Signal erzeugt wird,
**dadurch gekennzeichnet, dass**
- wenn der gemessene Auflagedruck nicht mehr zunimmt oder abnimmt, ein zweites sensitives Signal erzeugt wird, das mindestens ein Vibrationssignal umfasst, wenn die zweite Variation des Auflagedrucks (dp2) über eine zweite vorbestimmte Dauer (dt2) in einem vordefinierten Bereich liegt, und dass das zweite sensitive Signal durch ein zweites akustisches Substitutionssignal substituiert wird, wenn die zweite Variation des Auflagedrucks (dp2') über die zweite vorbestimmte Dauer (dt2) aus dem zweiten vordefinierten Bereich austritt.

9. Verfahren zur Steuerung einer Kontrollvorrichtung für ein Kraftfahrzeug, bei dem
- eine erste Druckvariation eines Auflagedrucks eines Benutzers auf eine Touch-Oberfläche (2) gemessen und ein sensitives Signal erzeugt wird,
**dadurch gekennzeichnet, dass**
- das erste sensitive Signal mindestens ein Vibrationssignal umfasst, wenn die erste Variation des Auflagedrucks (dp1) über eine erste vorbestimmte Dauer (dt1) in einem ersten vordefinierten Bereich enthalten ist, wobei das erste sensitive Signal durch ein erstes akustisches Substitutionssignal substituiert wird, wenn die erste Variation des Auflagedrucks über die erste vorbestimmte Dauer aus dem ersten vordefinierten Bereich austritt,
- dann, wenn der gemessene Auflagedruck nicht mehr zunimmt oder abnimmt, ein zweites sensitives Signal erzeugt wird.

10. Verfahren zur Steuerung einer Kontrollvorrichtung für ein Kraftfahrzeug, bei dem
- eine erste Druckvariation eines Auflagedrucks (dp1) eines Benutzers auf eine Touch-Oberfläche (2) gemessen und ein sensitives Signal erzeugt wird,
**dadurch gekennzeichnet, dass**
- das erste sensitive Signal mindestens ein Vibrationssignal umfasst, wenn die erste Variation des Auflagedrucks (dp1) über eine erste vorbestimmte Dauer (dt1) in einem ersten vordefinierten Bereich enthalten ist, wobei das erste sensitive Signal durch ein erstes akustisches Substitutionssignal substituiert wird, wenn die erste Variation des Auflagedrucks über die erste vorbestimmte Dauer aus dem ersten vordefinierten Bereich austritt,
- dann, wenn der gemessene Auflagedruck nicht mehr zunimmt oder abnimmt, ein zweites sensitives Signal erzeugt wird, umfassend mindestens ein Vibrationssignal, wenn die zweite Variation des Auflagedrucks (dp2) über eine zweite vorbestimmte Dauer (dt2) in einem zweiten vordefinierten Bereich enthalten ist, wobei das zweite sensitive Signal durch ein zweites akustisches Substitutionssignal substituiert wird, wenn die zweite Variation des Auflagedrucks (dp2') über die zweite vorbestimmte Dauer (dt2) aus dem zweiten vorbestimmten Bereich austritt.

11. Kontrollvorrichtung für ein Kraftfahrzeug, umfassend:
- eine Touch-Oberfläche (2), umfassend einen Kontaktfühler, der geeignet ist, einen Auflagedruck auf der Touch-Oberfläche zu messen, und
- ein sensitives Signalmodul (4), das ausgeführt ist, um ein sensitives Signal als Antwort auf einen Kontakt der Touch-Oberfläche zu erzeugen,
**dadurch gekennzeichnet, dass** das sensitive Signalmodul (4) ausgeführt ist, um ein sensitives Signal zu erzeugen, umfassend mindestens ein Vibrationssignal, wenn die Variation des Auflagedrucks über eine vorbestimmte Dauer in einem vordefinierten Bereich enthalten ist, und um das sensitive Signal durch ein akustisches Substitutionssignal zu substituieren, wenn die Variation des Auflagedrucks über die vorbestimmte Dauer aus dem vordefinierten Bereich austritt.

## Claims

1. Method for commanding a control device for an automotive vehicle, in which device the pressure variation of a press of a user on a touch surface (2) is measured and a sensory stimulus is generated, **characterized in that** the sensory stimulus includes at least one vibratory stimulus when the variation in the press pressure (dp1, dp2, dp2') over a predetermined duration (dt1, dt2) is comprised in a predefined range and **in that** the sensory stimulus is replaced with a substitutional audio stimulus when the variation in the press pressure (dp1, dp2, dp2') over the predetermined duration (dt1, dt2) departs from the predefined range.

2. Command method according to the preceding claim, **characterized in that** the sensory stimulus includes a vibratory stimulus and an associated audio stimulus when the variation in the press pressure (dp1, dp2, dp2') over a predetermined duration (dt1, dt2) is comprised in a predefined range and the sensory stimulus including a vibratory stimulus and an associated audio stimulus is replaced with a substitutional audio stimulus when the variation in the press pressure (dp1, dp2, dp2') over the predetermined duration (dt1, dt2) departs from the predefined range.

3. Command method according to the preceding claim, **characterized in that** the frequency range of the substitutional audio stimulus is distinct from the frequency range of the audio stimulus associated with the vibratory stimulus.

4. Command method according to either of Claims 2 and 3, **characterized in that** the frequency range of the substitutional audio stimulus is substantially the same as the frequency range of the vibratory stimulus.

5. Command method according to one of the preceding claims, **characterized in that** the duration of the substitutional audio stimulus is substantially equal to the duration of the vibratory stimulus.

6. Command method according to one of the preceding claims, **characterized in that** the sensory stimulus includes at least one vibratory stimulus when the value of the variation in the press pressure (dp1, dp2, dp2') over a predetermined duration (dt1, dt2) is higher than or equal to a predefined threshold and **in that** the sensory stimulus is replaced with a substitutional audio stimulus when the value of the variation in the press pressure (dp1, dp2, dp2') over the predetermined duration (dt1, dt2) is smaller than the predefined threshold.

7. Command method according to the preceding claim, **characterized in that** the sensory stimulus is replaced with a substitutional audio stimulus when the press pressure decreases to zero in less than 80 ms.

8. Method for commanding a control device for an automotive vehicle, wherein
- a first pressure variation of a press (dp1) of a user on a touch surface (2) is measured and a first sensory stimulus is generated;
**characterized in that**
- **characterized in that** when the measured press pressure ceases to increase and decreases, a second sensory stimulus is generated including at least one vibratory stimulus when the second press pressure variation (dp2) over a second predetermined duration (dt2) is comprised in a second predefined range, the second sensory stimulus being replaced with a second substitutional audio stimulus when the second press pressure variation (dp2') over the second predetermined duration (dt2) departs from the second predefined range.

9. Method for commanding a control device for an automotive vehicle, wherein
- a first pressure variation of a press of a user on a touch surface (2) is measured and a first sensory stimulus is generated **characterized in that**
- the first sensory stimulus includes at least one vibratory stimulus when the first press pressure variation (dp1) over a first predetermined duration (dt1) is comprised in a first predefined range, the first sensory stimulus being replaced with a first substitutional audio stimulus when the first press pressure variation over the first predetermined duration departs from the first predefined range;
- then, when the measured press pressure ceases to increase and decreases, a second sensory stimulus is generated.

10. Method for commanding a control device for an automotive vehicle, wherein
- a first pressure variation of a press (dp1) of a user on a touch surface (2) is measured and a first sensory stimulus is generated **characterized in that**
- the first sensory stimulus includes at least one vibratory stimulus when the first press pressure variation (dp1) over a first predetermined duration (dt1) is comprised in a first predefined range, the first sensory stimulus being replaced with a first substitutional audio stimulus when the first press pressure variation over the first predetermined duration departs from the first predefined range;
- then, when the measured press pressure ceases to increase and decreases, a second sensory stimulus is generated including at least one vibratory stimulus when the second press pressure variation (dp2) over a second predetermined duration (dt2) is comprised in a second predefined range, the second sensory stimulus being replaced with a second substitutional audio stimulus when the second press pressure variation (dp2') over the second predetermined duration (dt2) departs from the second predefined range.

11. Control device for an automotive vehicle, including:
- a touch surface (2) including a contact sensor able to measure a press pressure on the touch surface; and
- a sensory stimulus module (4) configured to generate a sensory stimulus in response to a contact with the touch surface;
**characterized in that** the sensory stimulus module (4) is configured to generate a sensory stimulus including at least one vibratory stimulus when the variation in the press pressure over a predetermined duration is comprised in a predefined range and to replace the sensory stimulus with a substitutional audio stimulus when the variation in the press pressure over the predetermined duration departs from the predefined range.
